# FASCICULE DE BREVET EUROPEEN

(11) **EP 3 163 088 B1**
(45) Date de publication et mention de la délivrance du brevet: **02.06.2021**
(21) Numéro de dépôt: 16195869.9
(22) Date de dépôt: 26.10.2016
(51) Int. Cl.: F04D 25/06, F04D 29/62, H02K 5/15, H02K 5/22, H02K 11/33

(54) **GROUPE MOTO-VENTILATEUR ET INSTALLATION DE CHAUFFAGE, VENTILATION ET/OU CLIMATISATION POUR VÉHICULE AUTOMOBILE CORRESPONDANTE**
KÜHLERVENTILATORGRUPPE UND ENTSPRECHENDE ANLAGE ZUM HEIZEN, BELÜFTEN UND/ODER KLIMATISIEREN FÜR KRAFTFAHRZEUG
ELECTRIC FAN UNIT AND CORRESPONDING HEATING, VENTILATION AND/OR AIR-CONDITIONING FACILITY FOR A MOTOR VEHICLE

(30) Priorité: 29.10.2015 FR 1560359
(43) Date de publication de la demande: 03.05.2017
(73) Titulaire: Valeo Systemes Thermiques, 78320 Le Mesnil Saint Denis (FR)
(72) Inventeur: CAPOULUN, Geoffroy, 78000 VERSAILLES (FR); LE GOFF, Morgan, 91360 EPINAY SUR ORGE (FR); FARKH, Alain, 78490 MONTFORT L'AMAURY (FR)
(74) Mandataire: Tran, Chi-Hai

(56) Documents cités:
- EP-A1- 1 063 752
- WO-A1-2004/107536
- CN-A- 101 895 167
- CN-U- 203 554 140
- US-A1- 2010 283 344

## Description

L'invention est du domaine des installations de ventilation, chauffage et/ou climatisation. L'invention concerne en particulier un groupe moto-ventilateur notamment d'une telle installation.

Une installation de chauffage, ventilation et/ou climatisation de véhicule, notamment automobile est généralement utilisée pour distribuer de l'air dans l'habitacle du véhicule. Dans une telle installation, le flux d'air circulant est propulsé par un groupe moto-ventilateur aussi appelé pulseur, comportant notamment une roue de ventilateur et un moteur électrique apte à mettre en rotation la roue de ventilateur.

Le groupe moto-ventilateur comporte également un support moteur, solidarisé sur un boîtier de l'installation de chauffage, ventilation et/ou climatisation, apte à porter le moteur du groupe moto-ventilateur.

Classiquement, le moteur est piloté par un module de commande comprenant notamment un circuit de commande permettant d'alimenter les bobinages du moteur et un connecteur électrique permettant notamment d'amener l'énergie à ce circuit de commande et/ou des signaux de commande. Selon une solution connue, un support de module de commande porte ce module de commande. Il est connu que ce support de module de commande assure également la fonction de support de palier pour le moteur.

Afin de permettre un assemblage du groupe moto-ventilateur, le support moteur et le support de module de commande sont généralement assemblés entre eux dans une position fixe, avec le connecteur électrique pouvant s'étendre parallèlement ou orthogonalement par rapport à des plans d'extension principale du support moteur et du support de module de commande qui sont parallèles entre eux. Pour des raisons d'encombrement, le connecteur électrique s'étend de préférence parallèlement par rapport aux plans d'extension principale du support moteur et du support de module de commande. De plus, le connecteur électrique s'étend selon une direction fixe par rapport au boîtier sur lequel le groupe moto-ventilateur est monté.

Les concepteurs font habituellement le choix préalable de permettre un montage du groupe moto-ventilateur sur le véhicule automobile avec une orientation spécifique prédéfinie du connecteur électrique selon l'application. L'implantation du groupe moto-ventilateur sur le boîtier du véhicule doit prendre en compte plusieurs paramètres tels que notamment le risque d'intrusion d'eau dans le connecteur électrique du module de commande, l'encombrement, ou encore le montage du groupe moto-ventilateur dans le véhicule en particulier la connexion du connecteur électrique au faisceau du véhicule. En effet, il est préférable que le groupe moto-ventilateur soit agencé de sorte que le connecteur électrique soit orienté vers le bas selon l'agencement sur le véhicule pour éviter les intrusions d'eau. Par ailleurs, sur la chaîne de montage, un opérateur doit pouvoir accéder aisément au connecteur électrique, il est donc important que des câbles ou autres connecteurs n'empêchent pas l'opérateur d'accéder au connecteur électrique du module de commande du moteur du groupe moto-ventilateur.

Selon les solutions connues, le groupe moto-ventilateur est conçu spécifiquement pour chaque application, de manière à se conformer notamment à une orientation du connecteur électrique spécifique, qui est un point critique pour l'intégration sur le véhicule.

En conséquence, pour chaque type d'installation de chauffage, ventilation et/ou climatisation, il est nécessaire d'adapter l'ensemble du groupe moto-ventilateur. En particulier, le support moteur, ou plus précisément l'interface du support moteur avec le boîtier du véhicule, doit être modifiée. Or il peut s'agir d'une pièce compliquée dont la reconception et/ou la modification peut s'avérer longue.

Le manque de flexibilité s'avère contraignant et oblige de monter le groupe moto-ventilateur exclusivement selon un choix spécifique préalablement défini en fonction des besoins du constructeur automobile.

L'invention a donc pour objectif de pallier au moins partiellement ces problèmes de l'art antérieur en proposant un groupe moto-ventilateur dont l'assemblage et le montage sur le véhicule peut être adapté selon les besoins du constructeur automobile.

À cet effet, l'invention a pour objet un groupe moto-ventilateur pour une installation de chauffage, ventilation et/ou climatisation de véhicule automobile selon la revendication 1, le groupe moto-ventilateur comprenant :
- un moteur,
- un support moteur, et
- un support de module de commande formant support de palier pour le moteur,
   caractérisé en ce que le support moteur et le support de module de commande comprennent chacun au moins une zone de fixation, les zones de fixation étant aptes à coopérer l'une à l'autre pour l'assemblage du support moteur au support de module de commande, selon au moins deux positions différentes du support moteur par rapport au support de module de commande.

Autrement dit, les zones de fixation du support moteur et du support de module de commande sont configurée de sorte que le support moteur et le support de module de commande peuvent être assemblés l'un à l'autre selon au moins deux positions différentes.

Le moteur est notamment un moteur sans balai ou moteur à commutation électrique.

Ainsi, il y a au moins deux, de préférence trois, positions d'assemblage possibles entre le support moteur et le support de module de commande. Durant l'assemblage, on peut définir l'orientation du groupe moto-ventilateur par rapport au boîtier du véhicule et en conséquence dans quelle position assembler le support moteur et le support de module de commande.

Chaque zone de fixation comprend toutes les fonctionnalités de montage permettant l'assemblage du support moteur au support de module de commande. En particulier, les zones de fixation peuvent être aptes à recevoir un ou plusieurs éléments de montage qui peuvent être choisis parmi : des vis ou des ensembles vis-écrous, ou encore des rivets. En variante ou en complément, l'assemblage peut se faire par déformation de matière au niveau des zones de fixation complémentaires en vis-à-vis.

Selon l'invention, le support moteur et le support de module de commande présentent des plans d'extension principale paralèles, et la zone de fixation d'au moins l'un des supports est invariante par rotation d'un angle prédéfini autour d'un axe sensiblement orthogonal aux plans d'extension principale.

Avantageusement, les zones de fixation des deux supports, c'est-à-dire du support moteur et du support de module de commande, sont invariantes par rotation d'un angle prédéfini autour de l'axe sensiblement orthogonal aux plans d'extension principale.

Les deux groupes de pièces respectivement portées par le support moteur et le support de module de commande peuvent tourner l'un par rapport à l'autre pour être placés dans la position d'assemblage choisie.

Selon un aspect additionnel de l'invention, l'angle prédéfini est 120°.

Selon l'invention, au moins une zone de fixation du support moteur et/ou du support de module de commande comprend au moins deux jeux d'éléments de montage.

Selon l'invention, chaque jeu d'éléments de montage est l'image d'un autre jeu d'éléments de montage par rotation de l'angle prédéfini autour de l'axe sensiblement orthogonal aux plans d'extension principale.

Le support de module de commande et le support moteur peuvent ainsi être assemblés l'un à l'autre selon plusieurs positions et l'assemblage se fait avec plusieurs points de fixation, ce qui permet d'augmenter la robustesse de cet assemblage.

De préférence, le support moteur comporte trois jeux d'éléments de montage et le support du module de commande comporte également trois jeux d'éléments de montage.

Ainsi, le support moteur et le support du module de commande peuvent être assemblés selon trois positions différentes d'assemblage, ce qui permet de répondre à différents besoins quant à l'implantation du groupe moto-ventilateur sur le véhicule, notamment par rapport à l'orientation d'un connecteur électrique qui serait porté par le support de module de commande. De plus, avec trois points de fixation entre le support moteur et le support de module de commande, l'assemblage est robuste.

Selon un aspect supplémentaire de l'invention, les jeux d'éléments de montage d'une zone de fixation d'un support sont répartis selon un décalage angulaire constant. Avantageusement, les jeux d'éléments de montage du support moteur et du support de module de commande sont au nombre de trois et sont répartis selon un décalage angulaire de l'ordre de 120°. On assure ainsi un nombre suffisant de positions d'assemblage entre le support moteur et le support du module de commande pour répondre aux besoins d'implantation sur le véhicule, tout en garantissant un assemblage robuste.

Cette configuration est avantageusement adaptée à une forme sensiblement circulaire du support moteur et du support de module de commande.

Selon un mode de réalisation préféré, le module de commande du moteur comprend au moins un connecteur électrique s'étendant sensiblement parallèlement au plan d'extension principale du support de module de commande, et les zones de fixation du support moteur et du support de module de commande sont configurées de sorte que le connecteur électrique s'étend selon une direction distincte dans chaque position d'assemblage du support moteur et du support de module de commande.

Le connecteur électrique agencé parallèlement aux plans d'extension du support moteur et du support de module de commande permet de gagner en encombrement. De plus, l'invention permet d'avoir au moins deux, de préférence trois, positions différentes du connecteur électrique sans nécessiter de modifier les pièces du groupe moto-ventilateur. Il n'y a plus besoin de reconcevoir le support moteur par exemple pour adapter le groupe moto-ventilateur en terme d'orientation du connecteur électrique une fois assemblé au véhicule.

Selon un mode de réalisation particulier, le support de module de commande porte un circuit de commande, et la zone de fixation du support de module de commande comporte des éléments de montage agencés de façon conjointe sur le support de module de commande et sur le circuit de commande. Autrement dit, des éléments de montage associés sont agencés aussi bien sur le support de module de commande et sur le circuit de commande.

Selon un autre aspect de l'invention, les zones de fixation du support moteur et du support de module de commande présentent des éléments de montage complémentaires, dont au moins certains sont configurés pour permettre la fixation du support moteur au support de module de commande et sont choisis parmi la liste suivante : des vis, des ensembles écrous, des rivets, des orifices, des plots de fixation.

Selon encore un autre aspect de l'invention, le support de module de commande porte un module de commande comprenant un nombre prédéterminé de terminaux connectés au moteur, et les zones de fixation du support moteur et du support de module de commande présentent des éléments de montage complémentaires, dont au moins certains sont configurés pour permettre le passage des terminaux à travers le support moteur et le support de module de commande.

Selon un autre aspect de l'invention, le support de module de commande comporte des premières ouvertures pour le passage des terminaux, les premières ouvertures étant au même nombre que les terminaux. Le support moteur comprend des deuxièmes ouvertures pour le passage des terminaux, dont le nombre est déterminé en fonction du nombre de terminaux et du nombre de positions d'assemblage possibles entre le support moteur et le support de module de commande.

Le groupe moto-ventilateur comprend par exemple trois terminaux connectés entre le module de commande et le moteur, et le support moteur et le support de module de commande peuvent être assemblés l'un à l'autre selon trois positions différentes. Le support moteur comprend selon cet exemple six deuxièmes ouvertures pour le passage des trois terminaux selon les trois positions d'assemblage entre le support moteur et le support de module de commande.

Selon un mode de réalisation particulier,
- le support moteur comprend des parties formant saillie par rapport au support moteur et s'étendant en direction du support de module de commande, lesdites parties en saillie présentant les deuxièmes ouvertures pour le passage des terminaux, et
- le support de module de commande comporte en outre des cavités dans lesquelles débouchent certaines parties en saillie du support moteur.

Ainsi,
- d'une part les parties en saillie du support moteur qui sont traversées par les terminaux débouchent dans les premières ouvertures du support de module de commande, tandis que
- d'autre part les parties en saillie du support moteur non traversées par les terminaux débouchent dans les cavités correspondantes du support de module de commande.

Avantageusement, le support de module de commande comprend un moyen de refroidissement du module de commande, tel qu'un radiateur de refroidissement, qui permet d'évacuer et/ou dissiper la chaleur produite par les composants du module de commande.

L'invention concerne également une installation de chauffage, ventilation et/ou climatisation pour véhicule automobile caractérisée en ce qu'elle comprend au moins un groupe moto-ventilateur que défini précédemment.

Ainsi, un même groupe moto-ventilateur peut être assemblé selon différentes positions par rapport à ladite installation, notamment un boîtier de ladite installation recevant ce groupe moto-ventilateur. En particulier, le support de module de commande peut être assemblé au support moteur selon différentes orientations par rapport à ce support moteur formant notamment interface entre le groupe moto-ventilateur et ladite installation.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue éclatée d'un groupe moto-ventilateur selon l'invention,
- la figure 2 est une vue en perspective montrant un moteur, un module de commande et un support de module de commande du groupe moto-ventilateur de la figure 1,
- la figure 3 est une vue en perspective d'un support moteur du groupe moto-ventilateur de la figure 1,
- la figure 4 est une vue éclatée du support moteur et du support de module de commande avant assemblage,
- la figure 5a représente de façon schématique une vue de dessus du support de module de commande assemblé au support moteur selon une première position,
- la figure 5b représente de façon schématique une vue de dessus du support de module de commande assemblé au support moteur selon une deuxième position différente de la première position de la figure 5a,
- la figure 5c représente de façon schématique une vue de dessus du support de module de commande assemblé au support moteur selon une troisième position différente des première et deuxième positions des figures 5a et 5b,
- la figure 6 est une vue de dessus du support moteur de la figure 3,
- la figure 7 est une vue de dessus du support de module de commande de la figure 2 portant un circuit de commande du moteur du groupe moto-ventilateur, et
- la figure 8 est une vue de dessous du support de module de commande de la figure 7.

Sur ces figures, les éléments identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

Dans la description on peut indexer certains éléments, autrement dit on peut par exemple mentionner un premier élément ou un deuxième élément. Dans ce cas, il s'agit d'un simple indexage pour différencier et dénommer des éléments proches, mais non identiques. Cet indexage n'implique pas une priorité d'un élément, par rapport à un autre. On peut aisément interchanger de telles dénominations sans sortir du cadre de la présente invention.

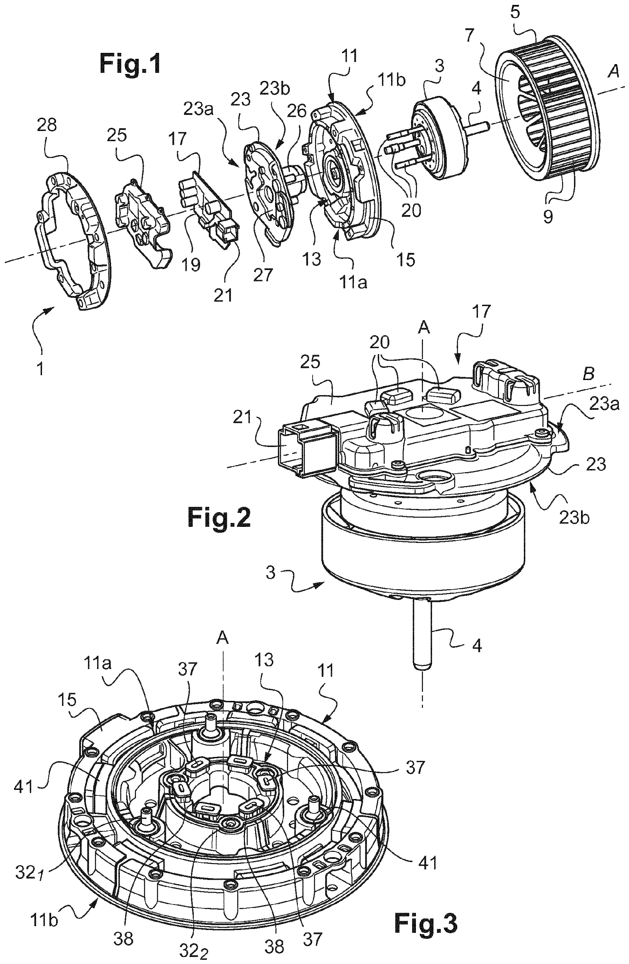

On a représenté sur la figure 1 une vue éclatée d'un groupe moto-ventilateur 1, également appelé pulseur, par exemple pour une installation de chauffage, ventilation et/ou de climatisation équipant un véhicule automobile. Le groupe moto-ventilateur 1 est donc destiné à être monté sur un boîtier de l'installation de chauffage, ventilation et/ou climatisation (non visible sur les figures).

Dans ce cas, le groupe moto-ventilateur 1 est agencé de manière à faire circuler un flux d'air dans un conduit de l'installation de chauffage, ventilation et/ou climatisation. Il peut s'agir d'un flux d'air extérieur prélevé à l'extérieur de l'habitacle, ou d'un flux d'air prélevé à l'intérieur de l'habitacle dit flux d'air recyclé, ou encore un mélange d'un flux d'air extérieur et d'un flux d'air recyclé. Le conduit d'air de l'installation de chauffage, ventilation et/ou climatisation distribue le flux d'air vers des bouches de sortie (non représentées) s'ouvrant dans l'habitacle du véhicule.

À cet effet, le groupe moto-ventilateur 1 comporte un moteur 3 et une roue de ventilateur 5 destinée à être entraînée par le moteur 3, de façon à assurer la mise en mouvement du flux d'air. Il s'agit en particulier d'un moteur 3 sans balai.

Plus précisément, le moteur 3 comporte un stator fixe et un rotor mobile par rapport au stator et apte à entraîner la roue de ventilateur 5. À l'état monté du groupe moto-ventilateur 1 par exemple sur un boîtier de l'installation de chauffage, ventilation et/ou climatisation, le stator du moteur 3 est fixe par rapport à ce boîtier.

En référence à l'exemple de réalisation illustré sur les figures 1 et 2, le moteur 3 s'étend autour d'un axe longitudinal *A*, correspondant à l'axe de rotation du moteur 3, et comprend un arbre de transmission 4 s'étendant selon l'axe longitudinal A. L'arbre de transmission 4 est par exemple agencé sensiblement au centre du moteur 3. Dans cet exemple, l'arbre de transmission 4 fait saillie du moteur 3 présentant ainsi une extrémité libre.

Le moteur 3 et la roue de ventilateur 5 sont coaxiaux. La roue de ventilateur 5 est montée sur l'arbre de transmission 4 du moteur 3.

Selon un exemple particulier de réalisation visible sur la figure 1, la roue de ventilateur 5 présente quant à elle une partie 7 ayant une forme sensiblement en bol, cette partie est par la suite désignée par bol 7. Le bol 7 est de forme sensiblement concave. En outre, la roue de ventilateur 5 peut présenter un méplat formé à la périphérie du bol 7, du côté destiné à coopérer avec un support moteur 11 décrit par la suite. Autrement dit, le bol 7 se termine par ce méplat. Le méplat s'étend dans cet exemple sensiblement orthogonalement par rapport à l'axe *A*.

La roue de ventilateur 5 comporte de plus un moyeu central, pour recevoir l'extrémité libre de l'arbre de transmission 4 du moteur 3. La roue de ventilateur 5 peut présenter une forme générale sensiblement cylindrique comprenant des pales ou ailettes 9 qui s'étendent dans cet exemple depuis la périphérie du bol 7, selon une direction sensiblement parallèle à l'axe longitudinal A du moteur 3. Autrement dit, selon le mode de réalisation particulier illustré, les pales ou ailettes 9 s'étendent en éloignement par rapport au méplat à la périphérie du bol 7 et sensiblement orthogonalement par rapport à ce méplat.

Le groupe moto-ventilateur 1 comporte encore un support moteur 11.

Le support moteur 11 présente une forme générale s'étendant selon un plan d'extension principale. L'axe *A* est sensiblement orthogonal à ce plan d'extension principale du support moteur 11.

Selon le mode de réalisation illustré sur les figures 1 et 3, le support moteur 11 présente une forme générale sensiblement circulaire.

Le support moteur 11 est par exemple réalisé en matériau plastique.

Le support moteur 11 définit une structure interne 13 pour la fixation du moteur 3. Dans l'exemple illustré, la structure interne 13 délimite un trou central.

Par ailleurs, le support moteur 11 est de préférence destiné à être monté sur le boîtier de l'installation de chauffage, ventilation et/ou climatisation au niveau d'une volute (non représentée) assurant la canalisation du flux d'air généré par le groupe moto-ventilateur 1. Avantageusement, le support moteur 11 comprend une bague externe 15 qui est destinée à être montée fixement sur un boîtier (non représenté) du véhicule. Le support moteur 11, et en particulier la bague externe 15, forme dans cet exemple une interface entre le groupe moto-ventilateur 1 et le véhicule, notamment l'installation de chauffage, ventilation et/ou climatisation du véhicule.

De plus, le support moteur 11 présente dans cet exemple une face supérieure 11a et une face inférieure 11b opposée. La face inférieure 11b du support moteur 11 est ici agencée en regard de la roue de ventilateur 5 (cf figure 1).

Le support moteur 11 présente en outre au moins une zone de fixation pour l'assemblage du support moteur 11 à au moins un autre élément du groupe moto-ventilateur 1 tel que décrit par la suite.

Selon l'exemple illustré sur les figures 1 et 2, le groupe moto-ventilateur 1 comporte en outre un module de commande 17 du moteur 3.

En référence aux figures 1 et 2, le module de commande 17 comprend un circuit de commande 19 tel qu'une carte de circuit imprimé connue sous le sigle anglais PCB pour « Printed Circuit Board », supportant un ensemble de composants électriques et/ou électroniques permettant de piloter le moteur 3. Le module de commande 17 comprend un nombre prédéterminé de terminaux 20 connectés au moteur 3 pour alimenter les bobinages du moteur 3. Selon l'exemple représenté non limitatif, le module de commande 17 comprend trois terminaux 20 connectés au moteur 3.

Le module de commande 17 comprend en outre au moins un connecteur électrique 21 destiné à être relié à un faisceau du véhicule, notamment pour amener de l'énergie et/ou un signal de commande au circuit de commande 19. Dans cet exemple, le connecteur électrique 21 est porté par le circuit de commande 19 en s'étendant selon une direction *B* sensiblement perpendiculaire à l'axe longitudinal *A* du moteur 3. Le connecteur électrique 21 s'étend donc ici radialement par rapport à l'axe longitudinal *A* du moteur 3. Selon le mode de réalisation décrit, la direction *B* d'extension du connecteur électrique 21 est sensiblement parallèle au plan d'extension principale du support moteur 11.

Le groupe moto-ventilateur 1 comprend en outre un support de module de commande 23. Le module de commande 17 est donc agencé sur ce support de module de commande 23, autrement dit le circuit de commande 19 et le connecteur électrique 21 sont portés par ce support de module de commande 23.

On peut prévoir de plus un capot de protection 25 agencé au-dessus du circuit de commande 19, de façon à recouvrir les composants portés par le circuit de commande 19, et fixé au support de module de commande 23. Ce capot de protection 25 présente une forme complémentaire de la forme du circuit de commande 19.

Le support de module de commande 23 présente une forme générale s'étendant selon un plan d'extension principale qui est parallèle au plan d'extension principale du support moteur 11. L'axe A est donc aussi sensiblement orthogonal au plan d'extension principale du support de module de commande 23.

Le support de module de commande 23 est avantageusement aligné au support moteur 11 selon l'axe *A* orthogonal aux plans d'extension principale de ces deux supports 11 et 23.

Selon le mode de réalisation illustré sur les figures 1 et 2, le support de module de commande 23 présente une forme générale sensiblement circulaire.

Le support de module de commande 23 présente dans cet exemple une face supérieure 23a et une face inférieure 23b opposée.

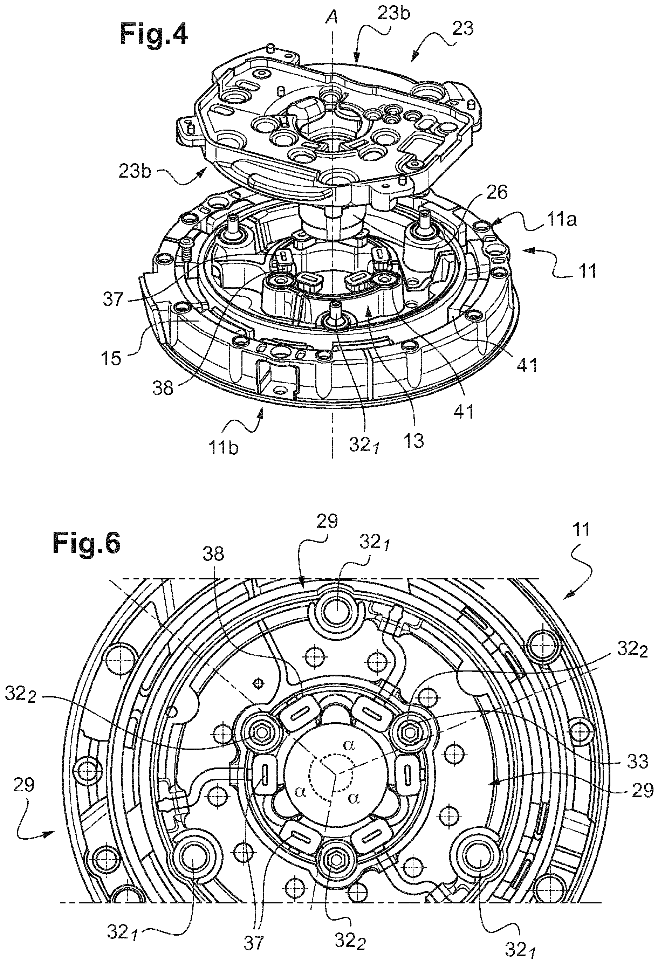

Le support de module de commande 23 présente en outre dans cet exemple un trou central. Plus précisément, selon le mode de réalisation décrit, le support de module de commande 23 fait également office de support de palier pour le moteur 3. Comme cela est mieux visible sur la figure 4, le support de module de commande 23 présente à cet effet une chambre sensiblement cylindrique 26 s'étendant axialement selon l'axe longitudinal A depuis la face inférieure 23b du support de module de commande 23. La chambre cylindrique 26 est destinée à recevoir une extrémité (non visible sur les figures) de l'arbre de transmission 4 du moteur 3, opposée à l'extrémité de l'arbre de transmission 4 montée sur la roue de ventilateur 5, et est donc destinée à servir de support de palier. La chambre cylindrique 26 est également destinée à être reçue dans le trou central du support moteur 11.

Selon l'exemple illustré, le support moteur 11 est agencé axialement entre le support de module de commande 23 et la roue de ventilateur 5. Dans ce cas, la face supérieure 11a du support moteur 11 est agencée en regard du support de module de commande 23.

Le groupe moto-ventilateur 1 peut comprendre en outre un moyen de refroidissement 27 du module de commande 17 du moteur 3, tel qu'un radiateur de refroidissement 27, pour évacuer la chaleur produite par les composants électriques et/ou électroniques portés par le circuit de commande 19.

Selon le mode de réalisation illustré, le support de module de commande 23 comprend un tel moyen de refroidissement 27 du module de commande 17.

Le support de module de commande 23 est avantageusement réalisé en aluminium.

Par ailleurs, le module de commande 17 est monté dans cet exemple sur la face supérieure 23a du support de module de commande 23. Le module de commande 17 peut être fixé par tout moyen approprié au support de module de commande 23, par exemple par vissage. La face inférieure 23b du support de module de commande 23 peut quant à elle être agencée en regard du support moteur 11. Le module de commande 17 est donc disposé sur le support de module de commande 23 du côté opposé au support moteur 11.

Selon le mode de réalisation illustré, le support de module de commande 23 est rigidement lié au stator du moteur 3.

En outre, le support de module de commande 23 est assemblé au support moteur 11. Le support de module de commande 23 est par exemple assemblé au support moteur 11, par sa face inférieure 23b en regard du support moteur 11. Plus précisément, le support de module de commande 23 est prévu pour coopérer avec la structure interne 13 du support moteur 11.

L'assemblage se fait suivant l'axe *A* orthogonal aux plans d'extension principale des deux supports 11 et 23, comme schématisé sur la figure 4. L'axe A est aussi désigné par axe d'assemblage.

Le support moteur 11 et le support de module de commande 23 sont par exemple assemblés l'un à l'autre par des faces d'assemblage 11a, respectivement 23b. La face d'assemblage 11a du support moteur 11 s'étend suivant le plan d'extension principale du support moteur 11. De façon similaire, la face d'assemblage 23b du support de module de commande 23 s'étend suivant le plan d'extension principale du support de module de commande 23. Les faces d'assemblage 11a et 23b s'étendent donc suivant des plans parallèles entre eux et perpendiculaires à l'axe longitudinal A.

À cet effet, le support de module de commande 23 présente au moins une zone de fixation pour l'assemblage au support moteur 11. Les zones de fixation d'une part du support moteur 11 et d'autre part du support de module de commande 23 sont aptes à coopérer l'une à l'autre pour l'assemblage du support moteur 11 au support de module de commande 23, selon au moins deux positions différentes du support moteur 11 par rapport au support de module de commande 23. Les zones de fixation du support moteur 11 et du support de module de commande 23 sont donc complémentaires.

Bien entendu, la zone de fixation du support moteur 11 comprend des éléments de montage et la zone de fixation du support de module de commande 23 comprend des éléments de montage complémentaires des éléments de montage de la zone de fixation du support moteur 11.

Le support moteur 11 et le support de module de commande 23 sont donc positionnés l'un par rapport à l'autre par l'intermédiaire de leurs zones de fixation.

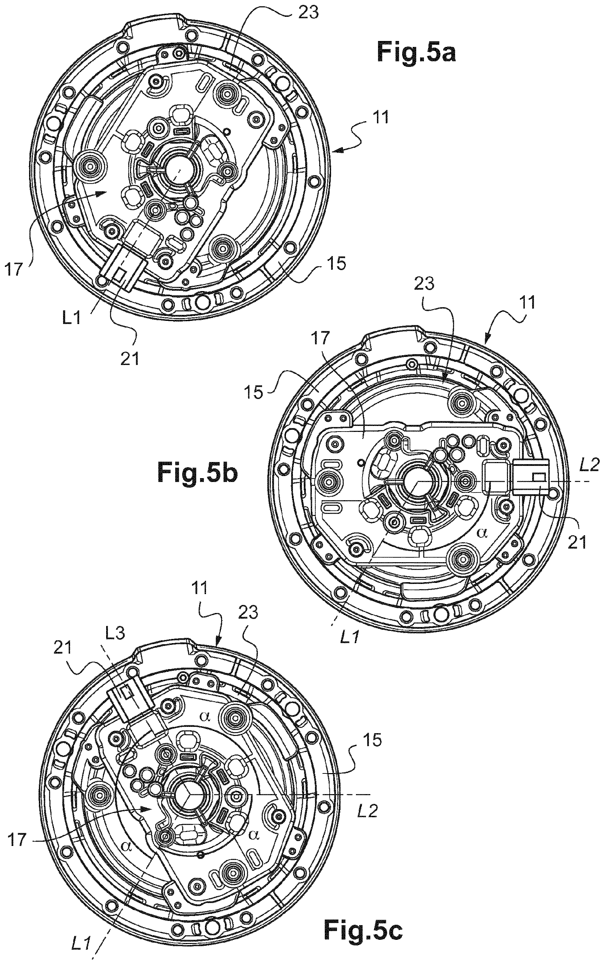

Plus précisément, l'assemblage du support de module de commande 23 au support moteur 11 peut se faire selon au moins deux positions différentes, de préférence selon trois positions différentes. A titre d'exemple, trois positions d'assemblage entre le support moteur 11 et le support de module de commande 23 sont illustrées sur les figures 5a à 5c. Dans chaque position, le connecteur électrique 21 s'étend selon une direction *L1, L2* ou *L3* distincte qui est donc différente selon la position d'assemblage choisie entre le support moteur 11 et le support de module de commande 23.

Ainsi, lors de l'assemblage, un premier ensemble porté par le support de module de commande 23 et un deuxième ensemble formé par le support moteur 11, peuvent être entraînés en rotation l'un par rapport à l'autre jusqu'à la position d'assemblage choisie parmi les trois positions d'assemblage possibles dans cet exemple. Selon le mode de réalisation décrit, le premier ensemble est représenté sur la figure 2, et comprend donc le support de module de commande 23 et notamment le moteur 3, le module de commande 17 avec son circuit de commande 19 et le connecteur électrique 21, et l'éventuel capot de protection 25. L'orientation du premier ensemble par rapport au deuxième ensemble est ajustable. L'orientation de ce premier ensemble est définie durant l'assemblage.

Après assemblage de l'ensemble formé par le support de module de commande 23 et les éléments qu'il porte, et le support moteur 11, un couvercle 28 (cf. figure 1) de forme générale sensiblement circulaire peut encore être agencé et fixé sur le support moteur 11. Le couvercle 28 est par exemple fixé au niveau de la bague externe 15 du support moteur 11.

Avantageusement, afin de permettre l'assemblage du support moteur 11 au support de module de commande 23 selon différentes positions d'assemblage, la zone de fixation d'au moins l'un des supports 11 ou 23 est invariante par rotation d'un angle α prédéfini autour de l'axe A sensiblement orthogonal aux plans d'extension principale des supports 11 et 23, tel que représenté sur les figures 5a à 8.

Selon le mode de réalisation illustré, aussi bien la zone de fixation du support moteur 11 que la zone de fixation du support de module de commande 23 sont invariantes par rotation d'un angle α prédéfini autour de l'axe *A*. L'angle α d'invariance par rotation est le même pour l'une ou l'autre des zones de fixation. Il s'agit dans l'exemple illustré d'une invariance par rotation de 120°.

La zone de fixation du support moteur 11 comporte au moins un jeu d'éléments de montage 29 visible sur la figure 6. L'expression «jeu d'éléments de montage » 29 ou 31 désigne ici au moins un élément de montage ou plusieurs éléments de montage.

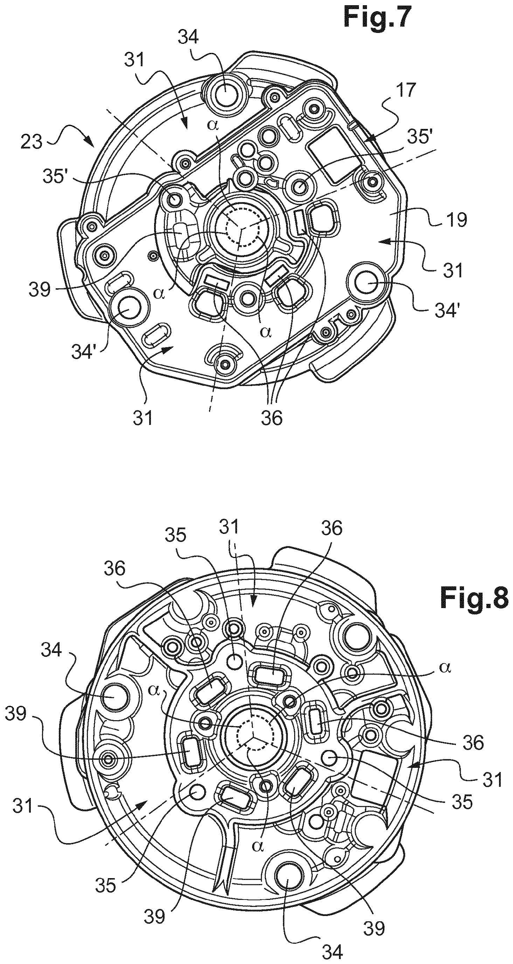

De façon similaire, la zone de fixation du support de module de commande 23 comporte au moins un jeu d'éléments de montage 31 visible sur les figures 7 et 8.

Sur les figures 6 à 8, les jeux d'éléments de montage 29, respectivement 31, sont délimités par des axes en pointillés.

Chaque jeu d'éléments de montage 29 ou au moins jeu d'éléments de montage 29 prévu sur la zone de fixation du support moteur 11 est agencé en vis-à-vis d'un jeu d'éléments de montage 31 complémentaires, prévu sur la zone de fixation du support de module de commande 23, à l'état assemblé du groupe moto-ventilateur 1.

De plus, comme cela est mieux visible sur la figure 7, le module de commande 17 est fixé sur le support de module de commande 23, et en particulier dans cet exemple le circuit de commande 19 est fixé sur le support de module de commande 23 dans une position prédéfinie. Le circuit de commande 19 recouvre au moins partiellement le support de module de commande 23. Dans ce cas, au moins certains éléments de montage sont ménagés de façon conjointe et complémentaire sur le support de module de commande 23 et le circuit de commande 19. Les jeux d'éléments de montage 31 sont donc prévus à la fois sur le module de commande 17, ici en particulier le circuit de commande 19, et sur le support de module de commande 23.

Par ailleurs, en se référant de nouveau à la figure 6, le support moteur 11 peut comporter au moins deux jeux d'éléments de montage 29.

En particulier, un jeu d'éléments de montage 29 est l'image de l'autre jeu d'éléments de montage 29 par rotation de l'angle a prédéfini autour de l'axe A. En particulier, on entend par image, l'image symétrique. Autrement dit, la séquence d'éléments de montage d'un jeu 29 est répétée par rotation de l'angle a prédéfini autour de l'axe A. Ces deux jeux d'éléments de montage 29 peuvent être désignés par jeux d'éléments de montage symétriques.

Les deux jeux d'éléments de montage 29 permettent d'assembler le support moteur 11 et le support de module de commande 23 l'un à l'autre selon au moins deux positions différentes suivant le jeu d'éléments de montage choisi.

En variante ou en complément, c'est le support de module de commande 23 (cf. figures 7 et 8) qui comporte au moins deux jeux d'éléments de montage 31 dont l'un est l'image de l'autre par rotation de l'angle α prédéfini autour de l'axe *A*.

Selon un mode de réalisation préféré, les deux supports, à savoir le support moteur 11 d'une part et le support de module de commande 23 d'autre part, comportent respectivement le même nombre de jeux d'éléments de montage 29, respectivement 31.

Selon le mode de réalisation illustré sur les figures 6 à 8, le support moteur 11 comporte trois jeux d'éléments de montage 29 et le support de module de commande 23 comporte également trois jeux d'éléments de montage 31. Chaque jeu d'éléments de montage 31 du support de module de commande 23 est agencé en vis-à-vis d'un jeu d'éléments de montage 29 complémentaire du support moteur 11 à l'état assemblé du groupe moto-ventilateur 1.

Selon ce mode de réalisation, les jeux d'éléments de montage 29, respectivement 31, sont répartis selon un décalage angulaire a constant sur la zone de fixation du support moteur 11, respectivement du support de module de commande 23. Le décalage angulaire correspond à l'angle d'invariance par rotation.

En outre en se référant de nouveau aux figures 6 à 8, les jeux d'éléments de montage 29 de la zone de fixation du support moteur 11 sont par exemple répartis selon un même décalage angulaire α que les jeux d'éléments de montage 31 de la zone de fixation du support de module de commande 23. Avantageusement, le décalage angulaire α est constant.

Selon l'exemple particulier illustré, les trois jeux d'éléments de montage 29 du support moteur 11 sont répartis selon un décalage angulaire α de l'ordre de 120°, et les trois jeux d'éléments de montage 31 du support de module de commande 23 sont répartis selon le même décalage angulaire α de l'ordre de 120°.

Les figures 5a à 5c illustrent de façon schématique les trois positions d'assemblage possibles entre le support moteur 11 et le support de module de commande 23 dans ce cas.

On a représenté sur la figure 5a, une première position d'assemblage du support moteur 11 au support de module de commande 23, dans laquelle le connecteur électrique 21 s'étend selon une première direction *L1.* On a représenté sur la figure 5b, une deuxième position d'assemblage du support moteur 11 au support de module de commande 23, dans laquelle le connecteur électrique 21 s'étend selon une deuxième direction *L2* différente de la première direction *L1* et formant ici un angle α de l'ordre de 120° par rapport à la première direction *L1.* Enfin, sur la figure 5c, on a représenté une troisième position d'assemblage du support moteur 11 au support de module de commande 23, dans laquelle le connecteur électrique 21 s'étend selon une troisième direction *L3* différente de la première direction *L1* et différente de la deuxième direction *L2.* De plus, cette troisième direction *L3* forme ici un angle α de l'ordre de 120° par rapport à la première direction *L1* et par rapport à la deuxième direction *L2.*

Pour passer d'une configuration à l'autre, il suffit de faire tourner le support de module de commande 23 et les pièces qu'il porte par rapport au support moteur 11. Ainsi, la configuration illustrée sur la figure 5b, respectivement 5c, est obtenue à partir des mêmes éléments que la configuration illustrée sur la figure 5a, la seule différence par rapport à la configuration de la figure 5a étant que le support de module de commande 23 et les pièces qu'il porte ont subi une rotation de l'ordre de 120° (figure 5b), respectivement 240° (figure 5c) autour de l'axe d'assemblage *A*.

Par ailleurs, chaque jeu d'éléments de montage 29 du support moteur 11 et chaque jeu d'éléments de montage 31 du support de module de commande 23 comprend au moins un élément de montage pour l'assemblage ou plus précisément la fixation du support moteur 11 au support de module de commande 23. Autrement dit, au moins certains éléments de montage sont configurés pour permettre la fixation du support moteur 11 au support de module de commande 23.

Le montage du support de module de commande 23 au support moteur 11 peut être assuré par tout élément de montage approprié, notamment des vis ou des ensembles vis-écrous, ou encore des rivets montés à chaud, qui traversent des ouvertures des zones de fixation sur chaque support, à savoir le support moteur 11 et le support de module de commande 23.

En variante ou en complément, l'assemblage entre le support moteur 11 et le support de module de commande 23 peut se faire par déformation de matière au niveau des zones de fixation complémentaires en vis-à-vis du support moteur 11 et du support de module de commande 23.

A titre d'exemple non limitatif, on peut prévoir que le support moteur 11 et le support de module de commande 23 soient assemblés l'un à l'autre par des éléments de montage qui diffèrent au niveau de leur périphérie et au niveau de leur bord interne.

En référence à la figure 6, le support moteur 11 comprend par exemple des premiers éléments de montage 32₁, tels que des plots de fixation 32₁, au niveau de sa périphérie. Les premiers éléments de montage 32₁, tels que des plots de fixation 32₁, sont par exemple venus de matière avec le support moteur 11. Le support moteur 11 comprend par exemple également des deuxièmes éléments de montage 32₂, tels que des vis de fixation ou ensembles vis-écrous, au niveau du bord interne entourant le trou central du support moteur 11, ainsi que des orifices 33 associés et de forme complémentaire pour recevoir les deuxièmes éléments de montage 32₂. Chaque jeu d'éléments de montage 29 du support moteur 11 comprend dans cet exemple un premier élément de montage 32₁, tel qu'un plot de fixation 32₁, et un deuxième élément de montage 32₂, tel qu'une vis reçue dans un orifice 33.

De façon complémentaire, le support de module de commande 23 peut être apte à recevoir les premiers éléments de montage 32₁ au niveau de la périphérie du support de module de commande 23 et les deuxièmes éléments de montage 32₂ au niveau du bord interne du support de module de commande 23. En référence aux figures 7 et 8, le support de module de commande 23 comprend à cet effet des premiers orifices 34 pour le passage des premiers éléments de montage 32₁, et des deuxièmes orifices 35 pour le passage des deuxièmes éléments de montage 32₂.

Bien entendu, selon l'exemple de réalisation illustré dans lequel le circuit de commande 19 est fixé sur le support de module de commande 23 en le recouvrant au moins partiellement, le circuit de commande 19 comporte également des premiers orifices 34' pour le passage des premiers éléments de montage 32₁, ces premiers orifices 34' sont associés et alignés aux premiers orifices 34 prévus sur le support de module de commande 23 aux endroits recouverts par le circuit de commande 19. De même, le circuit de commande 19 comporte aussi des deuxièmes orifices 35' pour le passage des deuxièmes éléments de montage 32₂, ces deuxièmes orifices 35' sont associés et alignés aux deuxièmes orifices 35 prévus sur le support de module de commande 23 aux endroits recouverts par le circuit de commande 19.

Chaque jeu d'éléments de montage 31 prévu sur le support de module de commande 23 comprend dans cet exemple un premier orifice 34 et un éventuel premier orifice 34' aligné et complémentaire prévu sur le circuit de commande 19, le ou les premier(s) orifice(s) 34 et 34' étant destinés à être traversés par un premier élément de montage 32₁, tel qu'un plot de fixation 32₁, à l'état assemblé du groupe moto-ventilateur 1, et chaque deuxième zone de fixation 31 comprenant en outre un deuxième orifice 35 prévu sur le support de module de commande 23 et un éventuel deuxième orifice 35' aligné et complémentaire prévu sur le circuit de commande 19, le ou les deuxième(s) orifice(s) 35 et 35' étant destinés à être traversés par un deuxième élément de montage 32₂, à l'état assemblé du groupe moto-ventilateur 1.

Les premiers éléments de montage 32₁, tels que des plots de fixation 32₁, du support moteur 11 sont par exemple destinés à être déformés une fois passés à travers les orifices 34 et 34' du support de module de commande 23 et notamment du circuit de commande 19, pour assurer une liaison mécanique entre le support moteur 11 et le support de module de commande 23, par exemple selon un procédé de bouterollage.

En outre, au moins certains éléments de montage des zones de fixation du support moteur 11 et du support de module de commande 23 sont configurés pour permettre le passage des terminaux 20 entre le module de commande 17 et le moteur 3.

En particulier, au moins certains éléments de montage du jeu d'éléments de montage 29 du support moteur 11, et/ou du jeu d'éléments de montage 31 du support de module de commande 23, sont configurés pour permettre le passage des terminaux 20 entre le module de commande 17 et le moteur 3 à travers le support moteur 11 et le support de module de commande 23.

Selon le mode de réalisation illustré, le support de module de commande 23 comporte des premières ouvertures 36, visibles sur la figure 7, pour le passage des terminaux 20. Plus précisément, le support de module de commande 23 comporte autant de premières ouvertures 36 qu'il y a de terminaux 20. La forme des premières ouvertures 36 est complémentaire de la forme des terminaux 20.

De façon complémentaire, le support moteur 11 comprend des deuxièmes ouvertures 37 pour le passage des terminaux 20. La forme des deuxièmes ouvertures 37 est complémentaire de la forme des terminaux 20. Dans ce cas, le nombre de deuxièmes ouvertures 37 du support moteur 11 est déterminé en fonction du nombre de terminaux 20 et du nombre de positions d'assemblage possibles entre le support moteur 11 et le support de module de commande 23. Selon l'exemple particulier décrit avec trois terminaux 20 connectés entre le module de commande 17 et le moteur 3, et dans lequel le support moteur 11 et le support de module de commande 23 peuvent être assemblés l'un à l'autre selon trois positions différentes, le support moteur 11 comprend six deuxièmes ouvertures 37 pour le passage des trois terminaux 20 selon les trois positions d'assemblage possibles entre le support moteur 11 et le support de module de commande 23.

De plus, comme cela est mieux visible sur les figures 3 et 4, le support moteur 11 peut comprendre des parties formant saillie 38 par rapport au plan défini par le support moteur 11, ces parties formant saillie 38 s'étendant en direction du support de module de commande 23 et présentant les deuxièmes ouvertures 37 pour le passage des terminaux 20.

De façon complémentaire, le support de module de commande 23 comporte en outre des cavités 39 dans lesquelles débouchent certaines parties en saillie 38 du support moteur 11. Les cavités 39 présentent un fond et ne sont pas débouchantes. Les parties en saillie 38 ou en surplomb du support moteur 11 sont donc destinées à s'engager soit dans les premières ouvertures 36 du support de module de commande 23 soit dans les cavités 39 du support de module de commande 23. Bien entendu, les parties en saillie 38 sont de formes complémentaires avec les premières ouvertures 36 d'une part et les cavités 39 d'autre part du support de module de commande 23.

En effet, selon la position d'assemblage entre le support moteur 11 et le support de module de commande 23 choisie, les terminaux 20 passent à travers seulement certaines deuxièmes ouvertures 37 du support moteur 11, ici trois deuxièmes ouvertures 37, et donc traversent seulement certaines parties en saillie 38 du support moteur 11. Les trois autres deuxièmes ouvertures 37 et donc trois autres parties en saillie 38, restent dépourvues de terminaux 20. Ainsi, selon l'exemple illustré, les parties en saillie 38 du support moteur 11 présentant les trois deuxièmes ouvertures 37 traversées par les trois terminaux 20, sont agencées en vis-à-vis des trois premières ouvertures 36 prévues sur le support de module de commande 23, tandis que les parties en saillie 38 présentant les trois deuxièmes ouvertures 37 dépourvues de terminaux 20 sont agencées en vis-à-vis des cavités 39 du support de module de commande 23 de sorte que ces parties en saillie 38 non traversées par les terminaux 20 débouchent dans les cavités 39.

Par ailleurs, selon le mode de réalisation illustré, les terminaux 20 traversent le support de module de commande 23 et le support moteur 11 au niveau de leur bord interne respectif délimitant le trou central. Il va de soi que les premières ouvertures 36 et les cavités 39 du support de module de commande 23 sont ménagées sur le bord interne du support de module de commande 23 délimitant le trou central, plus précisément de la chambre cylindrique 26. De façon complémentaire, les deuxièmes ouvertures 37, notamment prévues sur les parties en saillie 38 du support moteur 11, sont ménagées sur le bord interne du support moteur 11 délimitant le trou central apte à recevoir la chambre cylindrique 26.

Le groupe moto-ventilateur 1 peut encore comprendre au moins un moyen d'étanchéité 41 mieux visible sur la figure 4, disposé entre le support moteur 11 et le support de module de commande 23.

Le moyen d'étanchéité 41 est par exemple prévu au niveau des éléments de montage 32₁, 32₂ entre le support moteur 11 et le support de module de commande 23.

Le moyen d'étanchéité 41 est également avantageusement prévu entre la structure interne 13 du support moteur 11 permettant l'assemblage au support de module de commande 23 et portant le moteur 3, et la bague externe 15 formant interface avec l'installation de chauffage, ventilation et/ou climatisation.

On peut encore prévoir avantageusement un moyen d'étanchéité 41 au niveau des parties en saillie 38 du support moteur 11, le moyen d'étanchéité 41 venant dans ce cas en contact avec les premières ouvertures 36 ou les cavités 39 complémentaires prévues sur le support de module de commande 23 à l'état assemblé du groupe moto-ventilateur 1.

Le moyen d'étanchéité 41 est par exemple en matériau élastomère.

De plus, le moyen d'étanchéité 41 peut être réalisé par un surmoulage du support moteur 11.

Ainsi, un tel groupe moto-ventilateur 1 selon l'invention permet d'assembler le support moteur 11 et le support de module de commande 23 selon plusieurs positions d'assemblage, de préférence trois. La position d'assemblage est choisie durant l'assemblage, et permet d'adapter l'orientation du support de module de commande 23 par rapport au support moteur 11, et en conséquence d'adapter l'orientation du connecteur électrique 21 notamment par rapport au boîtier du véhicule une fois le groupe moto-ventilateur 1 monté sur le véhicule.

L'invention permet donc d'avoir plusieurs, de préférence trois, positions différentes du connecteur électrique 21 sans nécessiter de modifier les pièces du groupe moto-ventilateur 1, notamment le support moteur 11 ou l'interface avec le boîtier du véhicule formée par la bague externe 15 du support moteur 11 ici, pour adapter le groupe moto-ventilateur en terme d'orientation du connecteur électrique 21 une fois assemblé au véhicule.

Le support moteur 11 et le support de module de commande 23 présentent respectivement au moins une zone de fixation, les zones de fixation des deux supports 11 et 23 sont complémentaires l'une par rapport à l'autre, et comprennent toutes les fonctionnalités de montage permettant l'assemblage du support moteur 11 au support de module de commande 23, notamment les jeux d'éléments de montage 29, respectivement 31, qui sont répétés par rotation autour de l'axe d'assemblage *A*, pour permettre d'assembler le support moteur 11 et le support de module de commande 23 selon plusieurs positions, de préférence trois positions différentes d'assemblage, ce qui permet de répondre à différents besoins du constructeur automobile quant à l'implantation du groupe moto-ventilateur sur le véhicule.

De plus, avec plusieurs jeux d'éléments de montage 29 ; 31 sur la zone de fixation de chaque support, à savoir d'une part le support moteur 11 et d'autre part le support de module de commande 23, les points de fixation sont multiples et l'assemblage est plus robuste.

## Revendications

1. Groupe moto-ventilateur (1) pour une installation de chauffage, ventilation et/ou climatisation de véhicule automobile, comprenant :
- un moteur (3),
- un support moteur (11),
- un support de module de commande (23) formant support de palier pour le moteur (3),
le support moteur (11) et le support de module de commande (23) comprenant chacun au moins une zone de fixation, les zones de fixation étant aptes à coopérer l'une à l'autre pour l'assemblage du support moteur (11) au support de module de commande (23), selon au moins deux positions différentes du support moteur (11) par rapport au support de module de commande (23),
le support moteur (11) et le support de module de commande (23) présentant des plans d'extension principale parallèles, et la zone de fixation d'au moins l'un des supports (11, 23) étant invariante par rotation d'un angle (α) prédéfini autour d'un axe (*A*) sensiblement orthogonal aux plans d'extension principale,
**caractérisé en ce que** ladite au moins une zone de fixation du support moteur (11) et/ou du support de module de commande (23) comprend au moins deux jeux (29, 31) d'éléments de montage, chaque jeu (29, 31) d'éléments de montage étant l'image d'un autre jeu (29, 31) d'éléments de montage par rotation de l'angle (α) prédéfini autour de l'axe (A) sensiblement orthogonal aux plans d'extension principale.

2. Groupe moto-ventilateur (1) selon la revendication précédente, dans lequel les zones de fixation des deux supports moteur (11) et de module de commande (23) sont invariantes par rotation d'un angle (α) prédéfini autour de l'axe (*A*) sensiblement orthogonal aux plans d'extension principale.

3. Groupe moto-ventilateur (1) selon l'une des revendications 1 ou 2, dans lequel l'angle (a) prédéfini est 120°.

4. Groupe moto-ventilateur (1) selon l'une des revendications précédentes, dans lequel :
- le support de module de commande (23) porte au moins un connecteur électrique (21) s'étendant sensiblement parallèlement au plan d'extension principale du support de module de commande (23), et dans lequel
- les zones de fixation du support moteur (11) et du support de module de commande (23) sont configurées de sorte que le connecteur électrique (21) s'étend selon une direction (*L1* ; *L2* ; *L3*) distincte dans chaque position d'assemblage du support moteur (11) et du support de module de commande (23).

5. Groupe moto-ventilateur (1) selon l'une quelconque des revendications précédentes, dans lequel le support de module de commande (23) porte un circuit de commande (19), et dans lequel la zone de fixation du support de module de commande (23) comporte des éléments de montage agencés de façon conjointe sur le support de module de commande (23) et sur le circuit de commande (19).

6. Groupe moto-ventilateur (1) selon l'une quelconque des revendications précédentes, dans lequel les zones de fixation du support moteur (11) et du support de module de commande (23) présentent des éléments de montage complémentaires, dont au moins certains sont configurés pour permettre la fixation du support moteur (11) au support de module de commande (23) et sont choisis parmi la liste suivante : des vis, des ensembles écrous, des rivets, des orifices (33 ; 34, 34' ; 35, 35'), des plots de fixation (32₁, 32₂).

7. Groupe moto-ventilateur (1) selon l'une quelconque des revendications précédentes, dans lequel :
- le support de module de commande (23) porte un module de commande (17) comprenant un nombre prédéterminé de terminaux (20) connectés au moteur (3), et dans lequel
- les zones de fixation du support moteur (11) et du support de module de commande (23) présentent des éléments de montage complémentaires, dont au moins certains sont configurés pour permettre le passage des terminaux (20) à travers le support moteur (11) et le support de module de commande (23).

8. Groupe moto-ventilateur (1) selon la revendication précédente, dans lequel :
- le support de module de commande (23) comporte des premières ouvertures (36) pour le passage des terminaux (20), les premières ouvertures (36) étant au même nombre que les terminaux (20), et dans lequel
- le support moteur (11) comprend des deuxièmes ouvertures (37) pour le passage des terminaux (20), le nombre de deuxièmes ouvertures (37) du support moteur (11) étant déterminé en fonction du nombre de terminaux (20) et du nombre de positions d'assemblage possibles entre le support moteur (11) et le support de module de commande (23).

9. Groupe moto-ventilateur (1) selon la revendication précédente, dans lequel :
- le support moteur (11) comprend des parties formant saillie (38) par rapport au support moteur (11) et s'étendant en direction du support de module de commande (23), lesdites parties en saillie (38) présentant les deuxièmes ouvertures (37) pour le passage des terminaux (20), et dans lequel
- le support de module de commande (23) comporte en outre des cavités (39) dans lesquelles débouchent certaines parties en saillie (38) du support moteur (11).

10. Groupe moto-ventilateur (1) selon l'une quelconque des revendications précédentes, dans lequel le moteur (3) est un moteur sans balai ou moteur à commutation électrique.

11. Installation de chauffage, ventilation et/ou climatisation pour véhicule automobile **caractérisée en ce qu'**elle comprend au moins un groupe moto-ventilateur (1) conforme à l'une quelconque des revendications précédentes.

## Patentansprüche

1. Gebläseeinheit (1) für eine Heizungs-, Lüftungs- und/oder Klimatisierungsanlage eines Kraftfahrzeugs, umfassend:
- einen Motor (3),
- eine Motorgrundplatte (11),
- eine Steuerungsmodul-Grundplatte (23), die eine Lagergrundplatte für den Motor (3) bildet,
wobei die Motorgrundplatte (11) und die Steuerungsmodul-Grundplatte (23) jeweils mindestens einen Befestigungsbereich umfassen, wobei die Befestigungsbereiche geeignet sind, zur Montage der Motorgrundplatte (11) an die Steuerungsmodul-Grundplatte (23) gemäß mindestens zwei verschiedenen Positionen der Motorgrundplatte (11) im Verhältnis zur Steuerungsmodul-Grundplatte (23) miteinander zusammenzuwirken,
wobei die Motorgrundplatte (11) und die Steuerungsmodul-Grundplatte (23) parallele Haupterstreckungebenen aufweisen und der Befestigungsbereich mindestens einer der Grundplatten (11, 23) durch Drehung um einen vorgegebenen Winkel (α) um eine Achse (A), die im Wesentlichen orthogonal zur Haupterstreckungebene verläuft, invariant ist,
**dadurch gekennzeichnet, dass** der mindestens eine Befestigungsbereich der Motorgrundplatte (11) und/oder der Steuerungsmodul-Grundplatte (23) mindestens zwei Sätze (29, 31) von Einbauelementen umfasst, wobei jeder Satz (29, 31) von Einbauelementen das Abbild eines anderen Satzes (29, 31) von Einbauelementen durch Drehung um den vorgegebenen Winkel (α) um die Achse (A) ist, die im Wesentlichen orthogonal zu den Haupterstreckungebenen verläuft.

2. Gebläseeinheit (1) nach dem vorhergehenden Anspruch, wobei die Befestigungsbereiche der zwei Motor- (11) und Steuerungsmodul-Grundplatten (23) durch Drehung um einen vorgegebenen Winkel (α) um die Achse (A), die im Wesentlichen orthogonal zu den Haupterstreckungebenen verläuft, invariant ist.

3. Gebläseeinheit (1) nach einem der Ansprüche 1 oder 2, wobei der vorgegebene Winkel (α) 120° beträgt.

4. Gebläseeinheit (1) nach einem der vorhergehenden Ansprüche, wobei:
- die Steuerungsmodul-Grundplatte (23) mindestens einen elektrischen Verbinder (21) trägt, der sich im Wesentlichen parallel zur Haupterstreckungebene der Steuerungsmodul-Grundplatte (23) erstreckt, und wobei
- die Befestigungsbereiche der Motorgrundplatte (11) und der Steuerungsmodul-Grundplatte (23) so ausgebildet sind, dass sich der elektrische Verbinder (21) in jeder Montageposition der Motorgrundplatte (11) und der Steuerungsmodul-Grundplatte (23) in einer gesonderten Richtung *(L1; L2; L3)* erstreckt.

5. Gebläseeinheit (1) nach einem der vorhergehenden Ansprüche, wobei die Steuerungsmodul-Grundplatte (23) eine Steuerschaltung (19) trägt, und wobei der Befestigungsbereich der Steuerungsmodul-Grundplatte (23) Einbauelemente aufweist, die gemeinsam auf der Steuerungsmodul-Grundplatte (23) und auf der Steuerschaltung (19) angeordnet sind.

6. Gebläseeinheit (1) nach einem der vorhergehenden Ansprüche, wobei die Befestigungsbereiche der Motorgrundplatte (11) und der Steuerungsmodul-Grundplatte (23) komplementäre Einbauelemente aufweisen, von denen wenigstens einige dazu ausgebildet sind, die Befestigung der Motorgrundplatte (11) an der Steuerungsmodul-Grundplatte (23) zu gestatten und aus der folgenden Liste gewählt sind: Schrauben, Mutter-Anordnungen, Nieten, Öffnungen (33; 34, 34'; 35, 35'), Befestigungsstifte (32₁, 32₂) .

7. Gebläseeinheit (1) nach einem der vorhergehenden Ansprüche, wobei:
- die Steuerungsmodul-Grundplatte (23) ein Steuerungsmodul (17) trägt, das eine vorbestimmte Anzahl von Anschlüssen (20) umfasst, die mit dem Motor (3) verbunden sind, und wobei
- die Befestigungsbereiche der Motorgrundplatte (11) und der Steuerungsmodul-Grundplatte (23) komplementäre Einbauelemente aufweisen, von denen wenigstens einige dazu ausgebildet sind, den Durchtritt der Anschlüsse (20) durch die Motorgrundplatte (11) und die Steuerungsmodul-Grundplatte (23) zu gestatten.

8. Gebläseeinheit (1) nach dem vorhergehenden Anspruch, wobei:
- die Steuerungsmodul-Grundplatte (23) erste Öffnungen (36) zum Durchtritt der Anschlüsse (20) aufweist, wobei die ersten Öffnungen (36) in derselben Anzahl wie die Anschlüsse (20) vorliegen, und wobei
- die Motorgrundplatte (11) zweite Öffnungen (37) zum Durchtritt der Anschlüsse (20) aufweist, wobei die Anzahl von zweiten Öffnungen (37) der Motorgrundplatte (11) in Abhängigkeit von der Anzahl von Anschlüssen (20) und der Anzahl möglicher Montagepositionen zwischen der Motorgrundplatte (11) und dem Steuerungsmodul (23) bestimmt ist.

9. Gebläseeinheit (1) nach dem vorhergehenden Anspruch, wobei:
- die Motorgrundplatte (11) Abschnitte (38) aufweist, die im Verhältnis zur Motorgrundplatte (11) hervorstehen und sich in Richtung der Steuerungsmodul-Grundplatte (23) erstrecken, wobei die hervorstehenden Abschnitte (38) zweite Öffnungen (37) für den Durchtritt der Anschlüsse (20) aufweisen, und wobei
- die Steuerungsmodul-Grundplatte (23) ferner Vertiefungen (39) aufweist, in welche einige hervorstehende Abschnitte (38) der Motorgrundplatte (11) münden.

10. Gebläseeinheit (1) nach einem der vorhergehenden Ansprüche, wobei der Motor (3) ein bürstenloser Motor oder ein elektrisch kommutierter Motor ist.

11. Heizungs-, Lüftungs- und/oder Klimatisierungsanlage für ein Kraftfahrzeug, **dadurch gekennzeichnet, dass** sie mindestens eine Gebläseeinheit (1) nach einem der vorhergehenden Ansprüche umfasst.

## Claims

1. Motor-fan unit (1) for a motor vehicle heating, ventilation and/or air conditioning installation, comprising:
- a motor (3),
- a motor support (11),
- a control module support (23) forming a bearing support for the motor (3),
the motor support (11) and the control module support (23) each having at least one fastening zone, the fastening zones being able to cooperate with one another for the assembly of the motor support (11) with the control module support (23), in at least two different positions of the motor support (11) relative to the control module support (23),
the motor support (11) and the control module support (23) having parallel main extension planes, and the fastening zone for fastening at least one of the supports (11, 23) being invariant under rotation through a predefined angle (α) about an axis (*A*) substantially orthogonal to the main extension planes,
**characterized in that** said at least one fastening zone for fastening the motor support (11) and/or for fastening the control module support (23) comprises at least two sets (29, 31) of mounting elements, each set (29, 31) of mounting elements being the image of another set (29, 31) of mounting elements under rotation through the predefined angle (α) about the axis (*A*) substantially orthogonal to the main extension planes.

2. Motor-fan unit (1) according to the preceding claim, in which the fastening zones for fastening the motor support (11) and control module support (23) are invariant under rotation through a predefined angle (α) about the axis (*A*) substantially orthogonal to the main extension planes.

3. Motor-fan unit (1) according to either of Claims 1 and 2, in which the predefined angle (α) is 120°.

4. Motor-fan unit (1) according to one of the preceding claims, in which:
- the control module support (23) bears at least one electrical connector (21) extending substantially parallel to the main extension plane of the control module support (23), and in which
- the fastening zones for fastening the motor support (11) and for fastening the control module support (23) are configured such that the electrical connector (21) extends in a distinct direction (*L1; L2; L3*) in each position of assembly of the motor support (11) and of the control module support (23).

5. Motor-fan unit (1) according to any one of the preceding claims, in which the control module support (23) bears a control circuit (19), and in which the fastening zone for fastening the control module support (23) comprises mounting elements arranged jointly on the control module support (23) and on the control circuit (19) .

6. Motor-fan unit (1) according to any one of the preceding claims, in which the fastening zones for fastening the motor support (11) and for fastening the control module support (23) have complementary mounting elements, of which at least some are configured to allow the motor support (11) to be fastened to the control module support (23) and are chosen from the following list: screws, nut assemblies, rivets, orifices (33; 34, 34'; 35, 35'), fastening pegs (32₁, 32₂).

7. Motor-fan unit (1) according to any one of the preceding claims, in which:
- the control module support (23) bears a control module (17) comprising a predetermined number of terminals (20) connected to the motor (3), and in which
- the fastening zones for fastening the motor support (11) and for fastening the control module support (23) have complementary mounting elements, of which at least some are configured to allow the passage of the terminals (20) through the motor support (11) and the control module support (23).

8. Motor-fan unit (1) according to the preceding claim, in which:
- the control module support (23) comprises first openings (36) for the passage of the terminals (20), there being the same number of first openings (36) as there are terminals (20), and in which
- the motor support (11) comprises second openings (37) for the passage of the terminals (20), the number of second openings (37) of the motor support (11) being determined according to the number of terminals (20) and the number of possible positions of assembly between the motor support (11) and the control module support (23).

9. Motor-fan unit (1) according to the preceding claim, in which:
- the motor support (11) comprises parts (38) forming protuberances relative to the motor support (11) and extending towards the control module support (23), said protruding parts (38) having the second openings (37) for the passage of the terminals (20), and in which
- the control module support (23) further comprises cavities (39) into which certain protruding parts (38) of the motor support (11) emerge.

10. Motor-fan unit (1) according to any one of the preceding claims, in which the motor (3) is a brushless motor or an electrically switched motor.

11. Heating, ventilation and/or air conditioning installation for a motor vehicle, **characterized in that** it comprises at least one motor-fan unit (1) according to any one of the preceding claims.
